# FASCICULE DE BREVET EUROPEEN

(11) **EP 2 406 878 B1**
(45) Date de publication et mention de la délivrance du brevet: **03.05.2017**
(21) Numéro de dépôt: 10707898.2
(22) Date de dépôt: 09.03.2010
(51) Int. Cl.: H02P 5/00, H02P 15/00, H02K 7/10, F16D 27/01, F16D 35/00

(54) **DISPOSITIF POUR GENERER UN COUPLE DE FACON RAPIDE, SUR UNE PLAGE DYNAMIQUE ETENDUE ET AVEC PEU D'INERTIE**
EINRICHTUNG ZUM SCHNELLEN ERZEUGEN EINES DREHMOMENTS FÜR EINEN ERWEITERTEN DYNAMISCHEN BEREICH BEI GERINGER TRÄGHEIT
DEVICE FOR QUICKLY GENERATING A TORQUE FOR AN EXTENDED DYNAMIC RANGE WITH LOW INERTIA

(30) Priorité: 12.03.2009 FR 0901136
(43) Date de publication de la demande: 18.01.2012
(73) Titulaire: Université Pierre et Marie Curie (Paris 6), 75005 Paris (FR); Centre National de la Recherche Scientifique (C.N.R.S.), 75016 Paris (FR)
(72) Inventeur: MILLET, Guillaume, F-49400 Saumur (FR); HAYWARD, Vincent, F-75013 Paris (FR); HALIYO, Dogan Sinan, F-75011 Paris (FR); REGNIER, Stéphane, F-92270 Bois-Colombes (FR)
(74) Mandataire: Parzy, Benjamin Alain
(86) Numéro de dépôt international: PCT/EP2010/052970
(87) Numéro de publication internationale: WO 2010/102998

(56) Documents cités:
- GB-A- 714 735
- JP-A- 8 258 728
- US-A- 5 327 986

## Description

L'invention est relative à un dispositif pour générer un couple de façon rapide, sur une plage dynamique étendue et avec peu d'inertie.

### ARRIERE-PLAN DE L'INVENTION

Dans le domaine des interfaces haptiques, notamment des dispositifs à retour d'effort, comme par exemple une orthèse destinée à rééduquer les capacités motrices d'un patient, il est d'usage d'exercer à l'aide d'un moteur un effort ou un couple qui simule la résistance de l'environnement au mouvement du dispositif. Pour par exemple simuler un contact virtuel, un moteur électrique est commandé pour exercer sur un organe de sortie du dispositif un couple résistant qui s'oppose au mouvement du dispositif voulu par l'opérateur.

Pour simuler un contact avec une surface rigide virtuelle, il convient que le moteur soit suffisamment dimensionné pour réagir comme le ferait une surface rigide réelle. Malheureusement, il est connu qu'un moteur puissant présente en général un couple de friction important, ce qui limite sa capacité à rendre des forces de petite amplitude pour simuler un mouvement libre ou le toucher d'une texture. En outre, un tel moteur présente une inertie importante qui peut être ressentie par l'opérateur.

Pour compenser cette friction et cette inertie, on peut mettre en oeuvre une boucle d'asservissement en effort grâce à un couplemètre mesurant directement le couple à la sortie de l'actionneur. Outre les difficultés de construction propres aux couplemètres, sa localisation dans la chaîne cinématique est critique pour obtenir un bon compromis stabilité-précision.

On peut encore utiliser un moteur moins puissant de sorte que celui-ci ait peu de friction et d'inertie. Cependant, un moteur ainsi sollicité fonctionnerait souvent à la limite de ses possibilités et aurait donc une durée de vie limitée.

L'arrière-plan technologique de l'invention est notamment illustré par le document US 5 327 986.

### OBJET DE L'INVENTION

L'invention a pour objet un dispositif pour générer un effort de façon rapide, sur une plage dynamique importante et avec peu d'inertie.

### BREVE DESCRIPTION DE L'INVENTION

En vue de la réalisation de ce but, on propose un dispositif pour générer un couple sur un organe de sortie en réponse à une consigne de couple, comportant :
- un premier organe moteur comportant au moins un moteur d'une première puissance, ou petit moteur, ayant un arbre sur lequel l'organe de sortie est connecté ;
- un deuxième organe moteur comportant au moins un moteur d'une deuxième puissance plus importante que la première puissance, ou gros moteur, ayant un arbre relié en rotation à l'organe de sortie au moyen d'au moins un accouplement visqueux associé ;
- des moyens d'asservissement programmés pour, en réponse à une consigne de couple, alimenter le gros moteur pour que l'accouplement visqueux fournisse un couple visqueux répondant à la consigne de couple, et, en parallèle, alimenter le petit moteur pour qu'il fournisse le complément de couple entre la consigne de couple et le couple visqueux, le temps que le couple visqueux atteigne la valeur de la consigne de couple.

Par visqueux, on entend que le couple développé par l'accouplement visqueux est proportionnel à la différence des vitesses de rotation des deux arbres.

Ainsi, lorsque les moteurs sont en régime stationnaire dans lequel l'arbre du gros moteur tourne à vitesse constante ou est immobile, et que la consigne de couple augmente brutalement, le gros moteur est alimenté de manière à accélérer le plus rapidement possible l'arbre du gros moteur de sorte que la différence de vitesse entre les arbres des deux moteurs augmente rapidement, ce qui provoque une augmentation du couple visqueux de l'accouplement visqueux, qui augmente progressivement jusqu'au couple demandé.

En parallèle, le petit moteur est également alimenté pour fournir la différence de couple entre la consigne de couple et le couple visqueux, et avec une amplitude dans la limite de ses capacités. De plus, le petit moteur a une dynamique bien plus importante, grâce à sa faible inertie et sa faible friction, peut donc répondre rapidement à cette sollicitation.

L'organe de sortie est en permanence soumis à la somme des couples de l'arbre du petit moteur et du couple visqueux généré par l'accouplement visqueux. Cette somme est très sensiblement égale à la consigne de couple, sauf peut-être au tout début de la réponse, si la consigne de couple dépasse le couple maximum que peut fournir le petit moteur.

Le dispositif de l'invention répond donc à une consigne de couple de façon rapide, sur une large plage d'amplitude et avec une inertie faible. L'inertie du gros moteur est filtrée par l'accouplement visqueux et les moyens d'asservissement de sorte que l'opérateur ne la ressent pas.

### BREVE DESCRIPTION DES FIGURES

L'invention sera mieux comprise à la lumière de la description qui suit d'un dispositif selon un mode particulier de réalisation de l'invention, en référence aux figures des dessins annexés, parmi lesquelles :
- la figure 1 est une vue en perspective d'un dispositif selon l'invention ;
- la figure 2 est un schéma-bloc d'un asservissement possible du dispositif de l'invention ;
- les figures 3A et 3B illustrent deux graphes de réponse à une consigne de couple du dispositif de l'invention ;
- la figure 4 est une vue en perspective partiellement écorchée d'un accouplement visqueux particulièrement adapté au dispositif de l'invention.

### DESCRIPTION DETAILLEE DES FIGURES

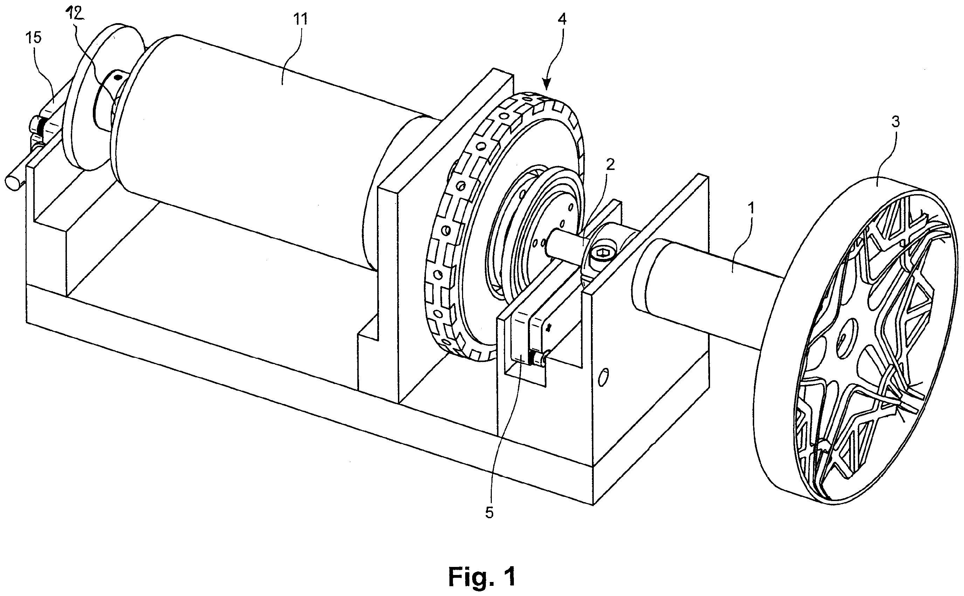

En référence à la figure 1, le dispositif de l'invention comporte un premier organe moteur comportant ici un moteur électrique 1 d'une première puissance (appelé ici petit moteur), ayant un arbre 2 dont une extrémité porte un organe de sortie 3 sur lequel on désire appliquer un couple donné. Ici, l'organe de sortie est symboliquement représenté par une roue. Ce peut être un volant ou une poignée manipulée par l'opérateur.

Le dispositif comporte un deuxième organe moteur comportant ici un moteur 11 de plus grande puissance (appelé ici gros moteur) ayant un arbre 12 qui est relié à l'arbre 2 du petit moteur 1 via un coupleur 4 à courants de Foucault.

Ainsi qu'il est bien évident pour l'homme du métier, l'organe de sortie 3 est donc soumis à un couple exercé par le petit moteur 1 sur son arbre 2, et à un couple exercé par le coupleur 4 sur l'arbre 2 du petit moteur 1.

Ici, le coupleur 4 est un accouplement du type visqueux et génère un couple proportionnel à la différence de vitesse de rotation des arbres des moteurs 1, 11, selon la relation : M_{visq} = b × (ω₁₁ - ω₁) où b est le coefficient visqueux du coupleur, et ω₁₁ et ω₁, les vitesses de rotation des arbres 12,2 des moteurs 11,1.

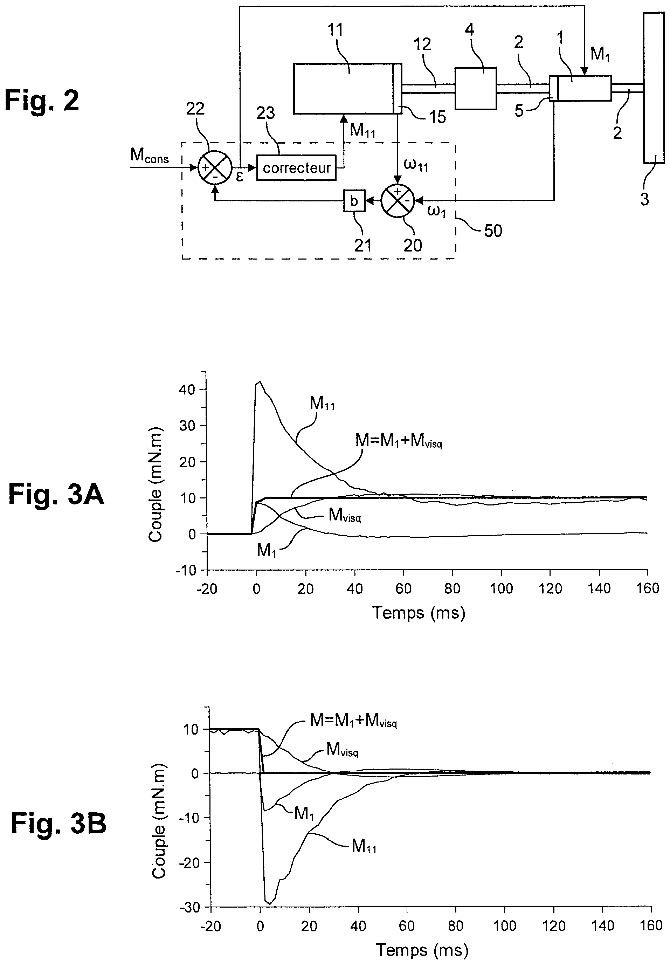

Les deux moteurs 1,11 sont asservis selon le schéma de la figure 2. Sur ce schéma, on reconnaît le petit moteur 1 et son arbre de sortie 2, le coupleur 4, le gros moteur 11 et son arbre de sortie 12, l'organe de sortie 3. Un calculateur 50, symbolisé par des traits pointillés sur la figure 2, est chargé d'asservir les moteurs selon l'asservissement décrit ci-après.

Pour les besoins de l'explication, on partira d'une situation où les arbres 2,12 des moteurs sont en régime stationnaire dans lequel les arbres sont immobiles, de sorte que le couple généré par le coupleur 4 est nul. L'organe de sortie 3 est tenu par l'opérateur.

Le calculateur 50 reçoit alors une consigne de couple M_{cons}. A partir de cette consigne, le calculateur va élaborer deux consignes opérationnelles M₁,M₁₁ à destination respectivement du petit moteur 1 et du gros moteur 11. Schématiquement ici, ces consignes sont illustrées comme étant directement envoyées à chacun des moteurs. Il faut bien sûr comprendre que les moteurs 1,11 reçoivent une puissance électrique qui est calibrée pour que les couples générés par ces moteurs soient des images des consignes opérationnelles correspondantes.

Comme on le constate sur le schéma, le petit moteur reçoit une consigne opérationnelle M₁ qui est la sortie d'un comparateur 22 qui élabore un signal d'erreur *ε* égal à la consigne de couple M_{cons} diminuée de l'estimation *M̃*_{visq} du couple visqueux M_{visq} généré par le coupleur 4. La sortie du comparateur 22 est également traitée par un correcteur 23 afin de générer une consigne opérationnelle M₁₁ pour le gros moteur 11. Le correcteur 23 a pour but d'améliorer la rapidité et la précision de la réponse du gros moteur 11.

L'estimation *M̃*_{visq} du couple visqueux M_{visq} généré par le coupleur 4 est effectuée par le calculateur à l'aide de capteurs de position 5,15 associés respectivement au petit moteur 1 et au gros moteur 11 qui fournissent au calculateur 50 les positions angulaires des arbres des moteurs 1, 11. Les vitesses ω₁ et ω₁₁, dérivées des positions angulaires, sont comparées par le comparateur 20, et leur différence est multipliée par un gain 21 de valeur b égale au coefficient visqueux du coupleur 4, ce qui permet d'établir l'estimation *M̃*_{visq}.

À la figure 3A est représentée la réponse du dispositif à une consigne de couple M_{cons} en forme d'échelon passant de 0 à 10 mN·m au temps t=0. En réponse à cette consigne, le correcteur 23 envoie au gros moteur 11 une consigne opérationnelle M₁₁ importante (de l'ordre ici de 4 fois le couple visé), afin que son arbre 12 accélère très rapidement. Du fait de cette accélération, le couple visqueux M_{visq} augmente progressivement.

Pendant ce temps, le petit moteur 1 fournit le complément de couple sensiblement égal, à de courts retards prêts en regard de ceux du couple M₁₁, à la consigne opérationnelle M₁. Ici, il a été décidé délibérément de limiter la consigne à une valeur maximale, en l'occurrence 8 mN·m, pour protéger le petit moteur 1. Du fait de l'augmentation progressive du couple visqueux M_{visq}, la consigne opérationnelle M₁ donnée au petit moteur diminue en proportion, jusqu'à devenir nulle lorsque le couple visqueux M_{visq} devient égal à la consigne de couple M_{cons}. Le petit moteur 1 est alors complètement soulagé. On voit sur le graphe le couple du petit moteur s'annuler progressivement, au fur et à mesure de l'augmentation du couple visqueux.

Pendant ce temps, l'arbre du gros moteur 11 s'est stabilisé à une vitesse pour laquelle le couple M₁₁ exercé par le gros moteur 11 sur son arbre est sensiblement égal à la somme de la consigne de couple et d'un couple de frottement du gros moteur.

La réponse en couple M du système (en gras sur le graphe) est la somme du couple M₁ exercé par le petit moteur et du couple M_{visq} exercé par le coupleur visqueux. On constate qu'elle suit bien la consigne en échelon, excepté au début, le temps que le couple visqueux atteigne la différence entre la consigne de couple (10 mN·m) et le couple maximum du petit moteur (8 mN·m), soit 2 mN·m.

Sur la figure 3B est illustrée la réponse du dispositif à une consigne de couple en échelon passant d'une valeur de 10 à 0 mN·m. On constate de même qu'elle suit bien la consigne en échelon.

Le dispositif de l'invention permet donc une réponse très proche de la consigne de couple en échelon, sans que l'opérateur ne puisse ressentir l'inertie ni la friction du gros moteur.

Le dispositif de l'invention est extrêmement simple et peut faire l'objet de variantes. Par exemple, la sortie du coupleur 4 peut être connectée à l'organe de sortie 3 non plus par l'intermédiaire de l'arbre du petit moteur comme illustré, mais directement à l'organe de sortie 3, celui-ci restant bien sûr connecté à l'arbre de sortie du petit moteur.

En outre, bien que dans l'exemple illustré ici, le premier organe moteur (le petit moteur) comporte ici un unique moteur, on pourra bien sûr coupler plusieurs moteurs. De même, bien que le deuxième organe moteur (le gros moteur) comporte ici un unique moteur, associé à un organe d'accouplement correspondant, le deuxième organe moteur pourra comporter plusieurs moteurs, le cas échéant chacun associé à un organe d'accouplement individuel. En variante les moteurs composant le deuxième organe moteur peuvent tous engrener une roue commune qui est reliée à l'organe de sortie par un unique organe d'accouplement.

De plus, bien que la consigne opérationnelle M₁₁ délivrée au deuxième organe moteur soit ici élaborée par un correcteur à partir d'une erreur entre la consigne de couple M_{cons} et le couple visqueux estimé M̃_{visq}, on pourra élaborer la consigne opérationnelle M₁₁ de toute autre façon. Par exemple l'estimation du couple visqueux, qui est ici obtenu par mesure des vitesses de rotation, peut également être obtenue au moyen d'un estimateur ou d'un modèle des organes moteurs. Pour élaborer la consigne opérationnelle M₁₁, on peut partir directement de la consigne de couple M_{cons}, soit en la traitant avec un correcteur, soit en se contentant d'envoyer au deuxième organe moteur la consigne de couple M_{cons} en guise de consigne opérationnelle.

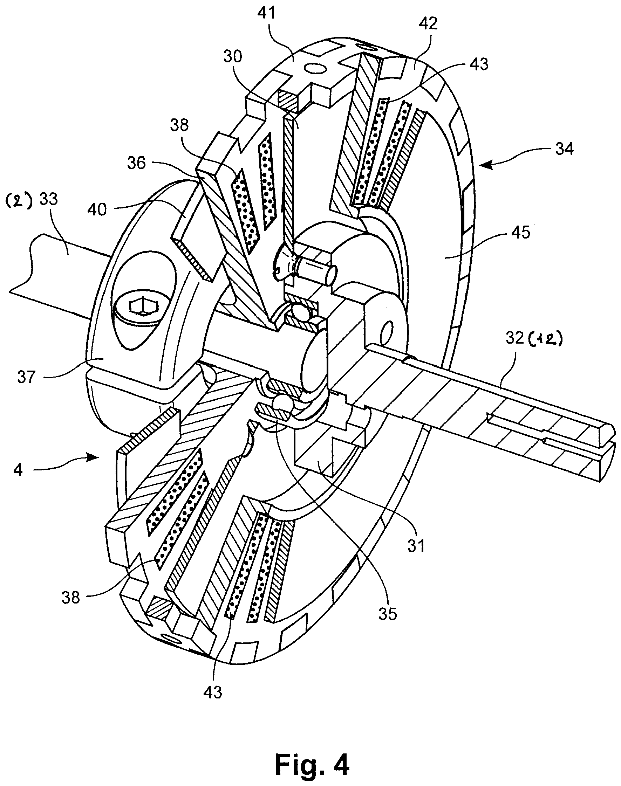

A la figure 4 est illustrée en coupe partielle la constitution d'un coupleur visqueux 4 à courants de Foucault particulièrement adapté au dispositif de l'invention. Celui-ci comprend un disque 30 métallique (par exemple en aluminium) vissé au moyeu 31 d'un arbre de sortie 32 (qui, comme cela est visible sur la figure 1, est connecté à l'arbre 2 du petit moteur 1). Le coupleur comprend un arbre d'entrée 33 (qui, comme cela est visible sur la figure 1, est connecté à l'arbre 12 du gros moteur 11) qui porte une cage 34 entourant le disque 30. La coaxialité des arbres 32,33 est assurée par un roulement 35.

La cage 34 comporte un premier flasque 36 qui est serrée sur l'arbre d'entrée 33 au moyen du collier de serrage 37. Le premier flasque 36 comporte un certain nombre d'encoches radiales recevant des aimants permanents 38 qui présentent tous des directions de polarisations parallèles à l'axe de rotation de des arbres 32,33, les polarisations étant cependant alternées d'un aimant à l'autre. Les aimants 38 s'étendent, d'un côté du premier flasque 36, en regard du disque 30, et de l'autre côté, en contact d'une plaque 40 métallique ferromagnétique annulaire portée par le premier flasque 36 et qui referme les flux magnétiques s'établissant entre deux aimants adjacents. Le premier flasque 36 comporte à sa périphérie des créneaux qui sont engagés dans des creux latéraux réalisés sur un côté d'une ceinture périphérique 41. Des creux latéraux similaires, réalisés sur l'autre côté de la ceinture périphérique 41, coopèrent avec des créneaux périphériques d'un deuxième flasque 42. Comme le premier flasque 36, le deuxième flasque 42 comporte le même nombre d'encoches recevant des aimants permanents 43 qui ont des directions de polarisation parallèles à l'axe de rotation des arbres 32,33, les polarisations étant alternées d'un aimant à l'autre. Les aimants 43 s'étendent d'un côté du deuxième flasque 42 en regard du disque 30, et de l'autre côté, sont en contact d'une plaque 45 métallique ferromagnétique annulaire portée par le deuxième flasque 42 qui referme les flux magnétiques s'établissant entre deux aimants adjacents. Les flasques 36,42 et la ceinture périphérique 41 sont ici réalisés en matière plastique.

Les aimants 38,43 portés par les deux flasques 36,42 sont disposés en regard l'un de l'autre, de sorte que deux aimants se faisant face ont une même direction de polarisation. Les aimants ainsi disposés génèrent un flux magnétique entre les flasques 36,42 dont les lignes sont perpendiculaires au disque 30 perpendiculaire au disque 30 en étant alternativement orientées d'un flasque à l'autre. Un tel coupleur crée un couple magnétique proportionnel à la différence des vitesses de rotation du disque 30 et de la cage 34. Pour réduire les pertes, le jeu entre les aimants permanents 38,43 et le disque 30 est de préférence très faible.

D'autres constitutions du coupleur visqueux 4 sont possibles. Une première variante est une configuration tubulaire, dans laquelle le disque métallique est remplacé par un tube tournant entre deux flasques tubulaires portant les aimants polarisés radialement. Enfin, La disposition des aimants peut, plutôt que le schéma alterné illustré, suivre tout autre disposition, comme par exemple une disposition selon une configuration de Halbach.

Plutôt qu'un coupleur visqueux à courants de Foucault, on pourra cependant utiliser d'autres types de coupleurs visqueux, comme un coupleur hydraulique.

Les applications potentielles de l'invention sont diverses. Les systèmes haptiques couvrent en général tout dispositif en contact avec un être humain. Une orthèse de rééducation bénéficiera d'actionneurs à faible impédance mécanique. Cette propriété élargie la gamme des impédances programmables. En réalité virtuelle et en téléopération on pourra concevoir des systèmes de très grande transparence.

En instrumentation, on pourra réaliser des pots vibrants dont la masse apparente est très faible, mais capables de fournir un effort important dans une large bande passante. De cette manière une structure pourrait être identifiée par des méthodes d'excitation par des signaux aléatoires large bande sans perturber la structure mesurée. Une autre application concerne des suspensions actives pour isoler des charges des vibrations ambiantes avec réjection des perturbations dans une large bande passante (table anti-vibration, lévitation active).

Il est possible qu'il existe des possibilités pour les suspensions actives dans les transports, ainsi que dans la motorisation électromécanique des sabots de frein à disque.

En robotique, on pourra réaliser des systèmes d'assemblage (composants électroniques, agro-alimentaire, mécanique grand public) haute performance, à efforts de contact contrôlé, qui soient à la fois très rapides et très légers. On pourra également réaliser des systèmes à haute vitesse où le succès du procédé dépend des efforts appliqués en dépit des incertitudes géométriques (polissage, gravure, ébavurage).

En dispositifs médicaux, on pourra réaliser des portiques pour canons à rayon X (et autres systèmes imageurs mobiles, positron, etc.) assez puissants pour soutenir de fortes charges mais aussi précis, sans vibrations et compatibles avec le contact (accidentel ou non) avec les humains. On pourra également réaliser un dispositif de contact permanent à faible interaction avec un organe physiologique vivant oscillant tel un coeur battant.

En aérospatiale, on pourra réaliser des systèmes de pointage asservis (antenne, radar) à haute performance.

## Revendications

1. Dispositif pour générer un couple sur un organe de sortie (3), comportant :
- un premier organe moteur comportant au moins un moteur (1) d'une première puissance, ayant un arbre (2) sur lequel l'organe de sortie est connecté ;
- un deuxième organe moteur comportant au moins un moteur (11) d'une deuxième puissance plus importante que la première puissance, ayant un arbre (12) relié en rotation à l'organe de sortie via des moyens d'accouplement (4) ;
le dispositif étant **caractérisé en ce que** les moyens d'accouplements (4) soient des moyens d'accouplement visqueux, et **en ce qu'**il comporte des moyens d'asservissement (50) programmés pour, en réponse à une consigne de couple (M_{cons}), alimenter le deuxième organe moteur (11) pour que les moyens d'accouplement visqueux fournissent un couple visqueux (M_{visq}) répondant à la consigne de couple, et, en parallèle, alimenter le premier organe moteur (1) pour qu'il fournisse le complément de couple entre la consigne de couple et le couple visqueux, le temps que le couple visqueux atteigne la valeur de la consigne de couple.

2. Dispositif selon la revendication 1, dans lequel les moyens d'asservissement sont adaptés à générer pour le premier organe moteur (1) une consigne opérationnelle (M₁) élaborée à partir d'une différence (ε) entre la consigne de couple (M_{cons}) et une estimation (*M̃*_{visq}) du couple généré par l'accouplement visqueux.

3. Dispositif selon la revendication 2, dans lequel la consigne opérationnelle à destination du premier organe moteur est limitée à une valeur maximale déterminée.

4. Dispositif selon la revendication 1, dans lequel les moyens d'asservissement sont adaptés à générer pour le deuxième organe moteur (11) une consigne opérationnelle élaborée à partir d'une différence (ε) entre la consigne de couple (M_{cons}) et une estimation (*M̃*_{visq}) du couple généré par l'accouplement visqueux, la différence étant traitée par un correcteur (23).

5. Dispositif selon la revendication 1, dans lequel le coupleur visqueux (4) met en oeuvre des courants de Foucault pour créer un couple proportionnel à la différence des vitesses des arbres d'entrée et de sortie des moyens d'accouplement.

6. Dispositif selon la revendication 5, dans lequel les moyens d'accouplement visqueux comprennent une cage (34) comportant deux flasques qui portent des aimants permanents (38,43) qui s'étendent radialement pour définir entre les flasques un flux magnétique dont les lignes s'étendent perpendiculairement à un disque (30) monté tournant entre les flasques.

## Patentansprüche

1. Vorrichtung zum Erzeugen eines Drehmoments auf einem Abtriebselement (3), umfassend:
- ein erstes Antriebsorgan, das mindestens einen Motor (1) mit einer ersten Leistung umfasst, der eine Welle (2) hat, mit der das Abtriebselement verbunden ist;
- ein zweites Antriebsorgan, das mindestens einen Motor (11) mit einer zweiten Leistung umfasst, die größer als die erste Leistung ist, und der eine Welle (12) hat, die über Kupplungsmittel (4) drehbar mit dem Abtriebselement verbunden ist;
wobei die Vorrichtung **dadurch gekennzeichnet ist, dass** die Kupplungsmittel (4) viskose Kupplungsmittel sind und dass sie Regelungsmittel (50) umfasst, die so programmiert sind, dass sie in Antwort auf einen Drehmomentsollwert (M_{cons}) das zweite Antriebsorgan (11) versorgen, damit die viskosen Kupplungsmittel ein viskoses Drehmoment (M_{visq}) liefern, das dem Drehmomentsollwert entspricht, und parallel dazu das erste Antriebsorgan (1) versorgen, damit es den Drehmomentergänzungsbetrag zwischen dem Drehmomentsollwert und dem viskosen Drehmoment liefert, bis das viskose Drehmoment den Wert des Drehmomentsollwerts erreicht.

2. Vorrichtung nach Anspruch 1, bei der die Regelungsmittel angepasst sind, um für das erste Antriebsorgan (1) einen Betriebssollwert (M₁) zu erzeugen, der aus einer Differenz (ε) zwischen dem Drehmomentsollwert (M_{cons}) und einer Schätzung (*M̃_{visq}*) des von der viskosen Kupplung erzeugten Drehmoments gewonnen wird.

3. Vorrichtung nach Anspruch 2, bei der der Betriebssollwert für das erste Antriebsorgan auf einen vorgegebenen Maximalwert begrenzt ist.

4. Vorrichtung nach Anspruch 1, bei der die Regelungsmittel angepasst sind, um für das zweite Antriebsorgan (11) einen Betriebssollwert zu erzeugen, der aus einer Differenz (ε) zwischen dem Drehmomentsollwert (M_{cons}) und einer Schätzung (*M̃_{visq}*) des von der viskosen Kupplung erzeugten Drehmoments gewonnen wird, wobei die Differenz von einem Korrektor (23) verarbeitet wird.

5. Vorrichtung nach Anspruch 1, bei der der viskose Koppler (4) Foucault-Ströme einsetzt, um ein Drehmoment zu erzeugen, das proportional zu der Differenz der Geschwindigkeiten der Eingangswelle und der Ausgangswelle der Kupplungsmittel ist.

6. Vorrichtung nach Anspruch 5, bei der die viskosen Kupplungsmittel ein Gehäuse (34) umfassen, das zwei Flansche enthält, die Dauermagneten (38, 43) tragen, die sich radial erstrecken, um zwischen den Flanschen einen Magnetfluss zu definieren, dessen Kraftlinien sich senkrecht zu einer Scheibe (30) erstrecken, die drehend zwischen den Flanschen gelagert ist.

## Claims

1. A device for generating a torque on an output member (3), including:
• a first motor unit including at least one motor (1) of a first power, having a shaft (2) to which the output member is connected; and
• a second motor unit including at least one motor (11) of a second power higher than the first power, having a shaft (12) rotationally connected to the output member via coupling means (4);
the device being **characterized in that** the coupling means (4) are viscous coupling means and **in that** the device includes servo-control means (50) programmed, in response to a torque setpoint (Mₛₚ), to power the second motor unit (11) so that the viscous coupling means provide a viscous torque (M_{visc}) conforming to the torque setpoint and, in parallel with this, to power the first motor unit (1) so that it produces the additional torque between the torque setpoint and the viscous torque until the viscous torque reaches the value of the torque setpoint.

2. A device according to claim 1, wherein the servo-control means are adapted to produce an operational setpoint M₁ for the first motor unit (1) from a difference (ε) between the torque setpoint (Mₛₚ) and an estimate (*M̃*_{visc}) of the torque generated by the viscous coupler.

3. A device according to claim 2, wherein the operational setpoint for the first motor unit is limited to a particular maximum value.

4. A device according to claim 1, wherein the servo-control means are adapted to generate for the second motor unit (11) an operational setpoint produced from a difference (ε) between the torque setpoint (Mₛₚ) and an estimate (*M̃*_{visc}) of the torque produced by the viscous coupler, the difference being processed by a corrector (23).

5. A device according to claim 1, wherein the viscous coupler (4) employs eddy currents to produce a torque proportional to the difference between the speeds of the input and output shafts of the coupling means.

6. A device according to claim 5, wherein the viscous coupling means comprise a cage (34) having two flanges that carry permanent magnets (38, 43) that extend radially to define between the flanges a magnetic flux with flux lines that extend perpendicularly to a disk (30) mounted to rotate between the flanges.
